# EUROPEAN PATENT APPLICATION

(11) **EP 3 222 462 A1**
(43) Date of publication of application: **27.09.2017**
(21) Application number: 15861151.7
(22) Date of filing: 18.11.2015
(51) Int. Cl.: B60N 2/48, A47C 7/38

(54) **HEADREST FOR VEHICLE**

(30) Priority: 20.11.2014 KR 20140162820
(71) Applicant: Heo, Chi Young, Chuncheon-si, Gangwon-do 24223 (KR)
(72) Inventor: JUNG, Si Hun, Chuncheon-si Gangwon-do 24380 (KR)
(74) Representative: Rau, Schneck & Hübner Patentanwälte Rechtsanwälte PartGmbB
(86) International application number: PCT/KR2015/012420
(87) International publication number: WO 2016/080763

(57) **Abstract**

The present invention relates to a headrest for a vehicle, the headrest comprising: a fixed elevating unit installed at the top end of a seat backrest and capable of being raised; a fixing shaft fixed to the fixed elevating unit and extending in a horizontal direction; a moving frame installed on the fixing shaft and including a guide rail and an automatic power transfer unit, so as to move linearly forward and backward and rotate upward and downward; a coupling main body coupled in a state enclosing the moving frame, and moving together with the moving frame; and a manually operated unit enabling the moving frame to be manually adjusted on the coupling main body. The manually operated unit is characterized by including an operating switch for electrical control so as to be capable of controlling a current flowing to the automatic power transfer unit. Accordingly, the following effects are realized. The drawback of the unpleasing outer appearance of a coupling main body may be resolved by not including a pushrod which is a mechanical pressing structure that projects externally from the coupling main body. Moreover, an accident caused when the pushrod is pressed by external pressure so that the neck and head of a passenger are struck by an unexpected manual operation that results in greater injury, may be preemptively avoided.

## Description

### Technical Field

The present invention relates to a vehicle headrest and, more particularly, to a vehicle headrest capable of preventing malfunction thereof based on manual adjustment due to an impact of a rear-end collision and of greatly increasing product durability by automatically optimizing the distance between the headrest and the back of the head of an occupant (e.g., a driver or a passenger) while the vehicle is moving, and by improving the configuration and structure of the headrest to safely protect the neck and head of the occupant.

### Background Art

In general, a headrest is a device mounted on the top of a seat of a vehicle at a position corresponding to the head of an occupant (e.g., a driver or a passenger) to make the occupant comfortable and prevent a fatal neck injury in a vehicle crash.

Headrests developed up to now and used in commercial vehicles may be broadly divided into three types, e.g., tiltable, active, and foldable headrests.

A tiltable headrest has a function of manually adjusting an angle thereof to three positions, but causes a blind spot.

An active headrest has a function of supporting the neck by detecting vibration in a crash or by mechanically moving the headrest forward at the moment of a crash, but also causes a blind spot.

A foldable headrest has a function of being folded forward or backward by 90° to prevent a blind spot, but is inconvenient due to requiring manual adjustment.

As such, in some cases, a headrest of a passenger seat is detached or the passenger seat is tilted forward to solve the problem of a blind spot and ensure an open front field of view of an occupant of a back seat.

In addition, although a vehicle has three back seats, since a rear field of view of a driver who uses a rear-view mirror to check for following vehicles is blocked by headrests of the back seats, no headrest is mounted on the middle back seat. As such, whiplash injuries commonly occur in crashes.

To solve the above problems, a multifunction headrest capable of automatically and manually adjusting the height and angle thereof based on a body type of an occupant and of preventing a blind spot due to the headrest by being usually folded forward by 90° and being automatically unfolded to a vertical position thereof when the occupant is seated is currently being developed.

An example of a headrest technology capable of automatically adjusting headrest height and angle is disclosed in Korean Patent Publication No. 2011-0032719 (hereinafter referred to as 'Related Art 1').

However, the headrest disclosed in Related Art 1 separates a fixed gear and a worm gear from each other by pushing a headrest body aside for manual adjustment. Operation thereof is difficult due to the weight of the body, production of a manual adjuster is not easy, and the appearance thereof is unattractive because openings for moving parts of lifting supporters mounted on the top of a backrest of a seat and capable of being raised or lowered should have a large width, thereby causing difficulties in commercialization

As such, to solve the problems of Related Art 1, Korean Patent Registration No. 1300484 (Applicant: HEO, Chi Young; hereinafter referred to as 'Related Art 2') filed by the present applicant discloses a vehicle headrest.

However, since the headrest disclosed in Related Art 2 also has a structure in which a pushrod used for manual adjustment protrudes from a body, if the pushrod is pressed due to an external impact, e.g., a vehicle crash, engagement between a fixed gear and a worm gear is released and thus a body of the headrest may hit and seriously damage the neck and head of an occupant. In addition, the pushrod protruding from the body causes unattractive appearance.

Furthermore, since a spring should be provided around the pushrod to resiliently support the pushrod, an assembly process is complicated and manufacturing costs are greatly increased.

### Disclosure

### Technical Problem

Therefore, the present invention has been made in view of the above problems, and it is one object of the present invention to provide a vehicle headrest capable of preventing malfunction thereof based on manual adjustment due to an impact of a rear-end collision and of greatly increasing product durability by improving the configuration and structure of the headrest.

The above and other objects can be accomplished by the present invention described below.

### Technical Solution

In accordance with one aspect of the present invention, provided is a vehicle headrest including a fixed lifting unit mounted on a top of a backrest of a seat and capable of being raised or lowered, a fixed shaft fixed to the fixed lifting unit and extending in a horizontal direction, a movable frame mounted on the fixed shaft and including guide rails and an automatic power transmitter to linearly move in a forward/backward direction and rotationally move in an upward/downward direction, a coupled body coupled to surround the movable frame and moving together with the movable frame, and a manual adjuster mounted on the coupled body to manually adjust the movable frame, wherein the manual adjuster includes a manipulation switch for providing electrical control to cut off current flowing through the automatic power transmitter.

The manipulation switch may include buttons for individually providing forward driving force and backward driving force of the driving motor, and the coupled body may move in a forward/backward direction when one of the buttons is selectively pressed.

The automatic power transmitter may include a driving motor having mounted a first spur gear on a driving shaft thereof, a driven gear having mounted at a side thereof a second spur gear engaged with the first spur gear to rotationally move, and having mounted a worm gear at another side thereof, and a fixed gear coupled to the fixed shaft and engaged with the worm gear.

The driven gear and the fixed gear may be mounted in a center cover of the movable frame, the driving motor may be mounted outside the center cover, and a fixing bracket for fixing the driving motor may be mounted on the center cover.

The movable frame may further include a center cover for mounting the guide rails and the automatic power transmitter thereon, side covers mounted at two ends of the fixed shaft by interposing the center cover therebetween, and side guide rails coupled to the side covers to guide the side covers to move relative to the fixed shaft.

The fixed lifting unit may include a body, a transportation screw for raising or lowering the body, lifting supporters individually mounted at two sides of the body and extending by a certain length, and fixing clamps for integrally fixing the lifting supporters to the fixed shaft.

Each of the fixing clamps may include a first clamp and a second clamp complementarily coupled to each other by interposing the fixed shaft therebetween, and fastening bolts for fastening the first and second clamps.

### Advantageous effects

As apparent from the fore-going, since a manual adjuster includes a manipulation switch using an electrical control method to cut off current flowing through an automatic power transmitter, a mechanical pressing structure protruding from a coupled body, e.g., a pushrod, may not be required and thus a problem of unattractive appearance of the coupled body may be solved. In addition, a safety accident of hitting and seriously damaging the neck and head of an occupant (e.g., a driver or a passenger) due to unexpected manual adjustment in a case when the pushrod is pressed by an external pressure may be prevented.

### Description of Drawings

The above and other objects, features and other advantages of the present invention will be more clearly understood from the following detailed description taken in conjunction with the accompanying drawings, in which:
FIG. 1 is a perspective view showing that a vehicle headrest according to an embodiment of the present invention is mounted on a seat;
FIG. 2 is a front cross-sectional view showing the configuration of the vehicle headrest according to an embodiment of the present invention;
FIG. 3 is a partial magnified view of a movable frame of FIG. 2;
FIG. 4 is a partial magnified view of the coupling structure of a side cover and a side guide rail of FIG. 2;
FIG. 5 is a side cross-sectional view of FIG. 2;
FIG. 6 is a partial perspective view showing the coupling structure and configuration of the movable frame of FIG. 2;
FIG. 7 is a partial magnified view of FIG. 6;
FIG. 8 is a partial magnified view of FIG. 6 from another direction;
FIG. 9 includes side cross-sectional views showing an operation mechanism of the vehicle headrest according to an embodiment of the present invention.
FIG. 10 includes side cross-sectional views showing an operation order of the vehicle headrest (passenger seat) according to an embodiment of the present invention.

### Mode of the Invention

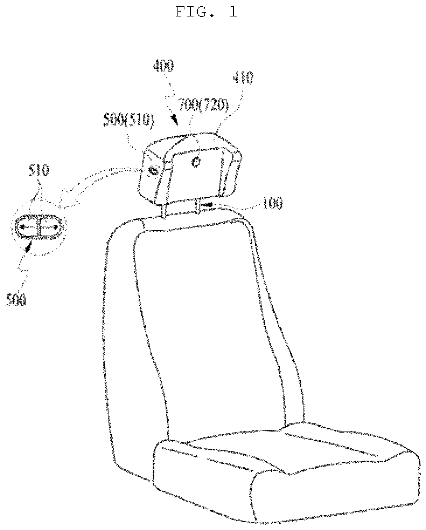

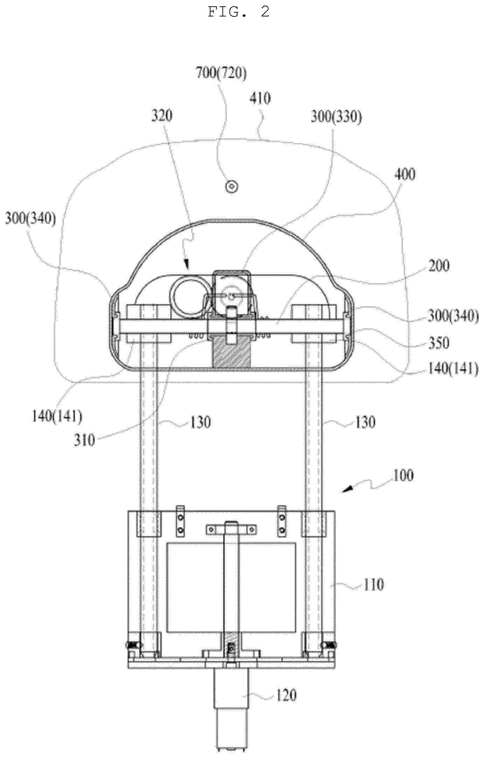

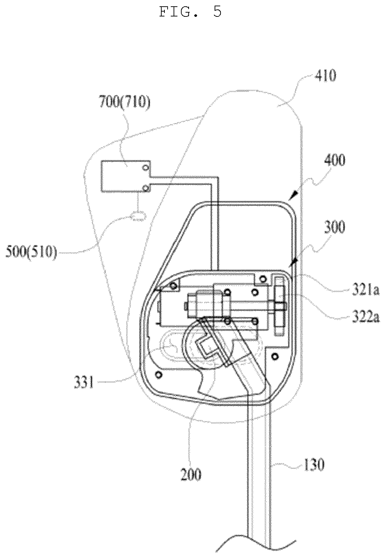

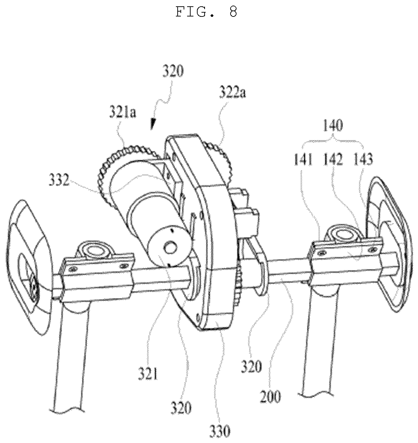

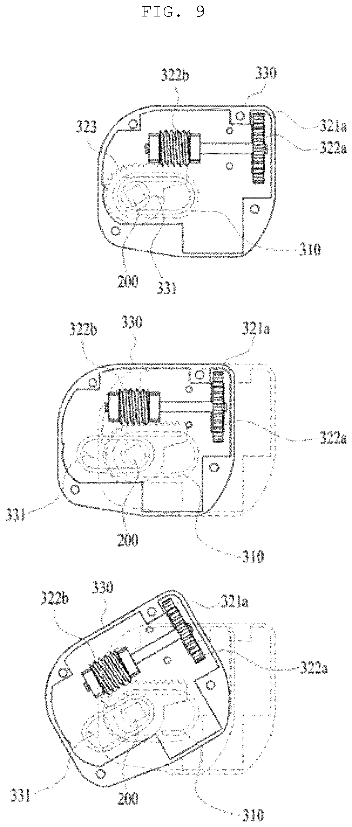

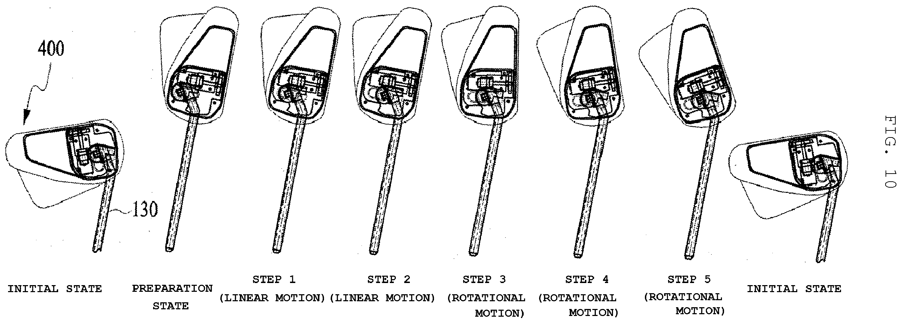

Hereinafter, the present invention will be described in detail by explaining embodiments of the invention with reference to the attached FIGS. 1 to 10.

As illustrated in the drawings, a vehicle headrest according to the present invention includes a fixed lifting unit 100 mounted on the top of a backrest of a seat and capable of being raised or lowered, a fixed shaft 200 fixed to the fixed lifting unit 100 and extending in a horizontal direction, a movable frame 300 mounted on the fixed shaft 200 and including guide rails 310 and an automatic power transmitter 320 to linearly move in a forward/backward direction and rotationally move in an upward/downward direction, a coupled body 400 coupled to surround the movable frame 300 and moving together with the movable frame 300, and a manual adjuster 500 mounted on the coupled body 400 to manually adjust the movable frame 300.

The fixed lifting unit 100 is mounted on the top of the backrest of the seat to be partially embedded therein. When the position of the head of an occupant (e.g., a driver or a passenger) is detected, the fixed lifting unit 100 adjusts the height of the coupled body 400 to be described below, based on the detected position and thus guides the coupled body 400 to an optimal position with respect to the head of the occupant.

The above-described fixed lifting unit 100 includes a body 110, a transportation screw 120 for raising or lowering the body 110, lifting supporters 130 individually mounted at two sides of the body 110 and extending by a certain length, and fixing clamps 140 for integrally fixing the lifting supporters 130 to the fixed shaft 200 to be described below.

That is, the height of the coupled body 400 is adjusted when the transportation screw 120 raises the body 110 in an upward/downward direction.

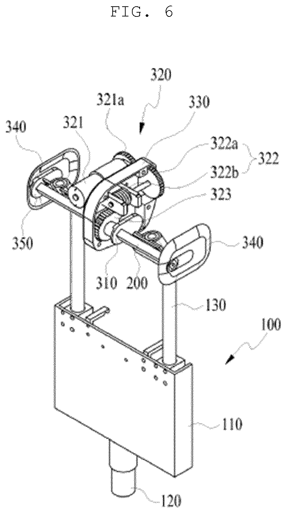

Each of the fixing clamps 140 includes a first clamp 141 and a second clamp 142 complementarily coupled to each other by interposing the fixed shaft 200 therebetween, and fastening bolts 143 for fastening the first and second clamps 141 and 142 (see FIG. 6).

In the vehicle headrest according to the present invention, since the lifting supporters 130 are fixed to the fixed shaft 200 due to the fixing clamps 140, fixing force and durability may be increased and maintenance may be easily performed.

The fixed shaft 200 is a member fixed to the fixed lifting unit 100 and extending in a horizontal direction by a certain length. The fixed shaft 200 may have a square pillar shape. However, the fixed shaft 200 is not limited thereto and may have a triangular pillar shape or a polygonal pillar shape.

The above-described fixed shaft 200 supports the movable frame 300 to stably enable linear and rotational motion thereof.

The movable frame 300 is mounted on the fixed shaft 200 and includes the guide rails 310 and the automatic power transmitter 320 to linearly move in a forward/backward direction and rotationally move in an upward/downward direction with respect to the fixed shaft 200.

Herein, the movable frame 300 further includes a center cover 330 for mounting the guide rails 310 and the automatic power transmitter 320 thereon, side covers 340 mounted at two ends of the fixed shaft 200 by interposing the center cover 330 therebetween, and side guide rails 350 coupled to the side covers 340 to guide the side covers 340 to move relative to the fixed shaft 200.

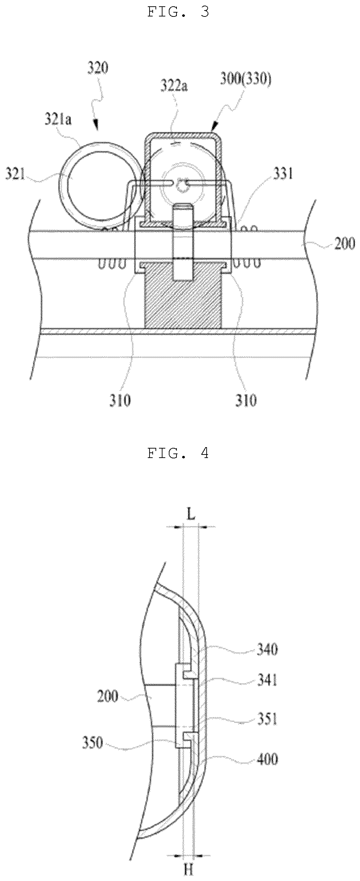

First guide holes 331, which are long holes for inserting the guide rails 310 thereinto, are provided in two side surfaces of the center cover 330 (see FIG. 3).

That is, the center cover 330 may linearly move in a forward/backward direction with respect to the guide rails 310 fixed to the fixed shaft 200.

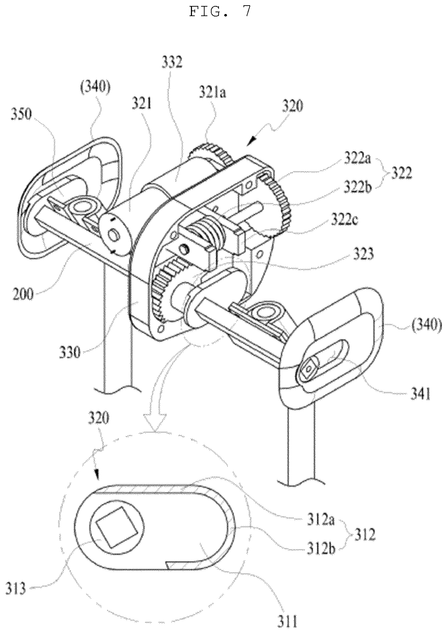

As illustrated in FIG. 7, each of the guide rails 310 includes a plate 311 having a track shape, and a limiting protrusion 312 protruding from a surface of the plate 311, and the limiting protrusion 312 includes a linear locking jaw 312a and an arc-shaped locking jaw 312b partially coupled to a protruding part of the first guide hole 331 of the center cover 330.

The limiting protrusion 312 is provided on a part of the edge of the plate 311 in order to enable rotational motion of the movable frame 300.

In other words, to enable rotational motion of the movable frame 300, the limiting protrusion 312 should be partially provided on a surface of the plate 311 in such a manner that interference between the protruding part of the first guide hole 331 of the center cover 330 and the limiting protrusion 312 is prevented.

In addition, a coupling part 313 corresponding to the shape of and coupled to the fixed shaft 200 is provided on the guide rail 310.

Due to the above-described configuration of the guide rails 310, the center cover 330 may linearly move in a forward/backward direction and rotationally move in an upward/downward direction relative to the fixed shaft 200.

The side guide rails 350 are coupled to the side covers 340, and appropriately guide the coupled body 400 in a proceeding direction without being shaken from side to side when the movable frame 300 linearly and rotationally moves.

Second guide holes 341, which are long holes for inserting the side guide rails 350 thereinto, are provided in the side covers 340.

The side guide rails 350 are the same as or similar to the guide rails 310, and detailed descriptions of the configuration and operation thereof are not provided herein.

However, as illustrated in FIG. 4, a coupling part 351 of the side guide rail 350, which is coupled to the second guide hole 341 of the side cover 340, may have a structure in which a hole depth L of the second guide hole 341 is less than a protruding length H of the coupling part 351.

As such, friction and interference between the coupling parts 351 of the side guide rails 350 and the coupled body 400 are prevented when the side covers 340 linearly or rotationally move together with the center cover 330.

The automatic power transmitter 320 transmits power to linearly and rotationally move the movable frame 300, and includes a driving motor 321 having mounted a first spur gear 321a on a driving shaft thereof, a driven gear 322 having mounted at a side thereof a second spur gear 322a engaged with the first spur gear 321a to rotationally move, and having mounted a worm gear 322b at another side thereof, and a fixed gear 323 coupled to the fixed shaft 200 and engaged with the worm gear 322b.

That is, when the first spur gear 321a rotates due to the driving motor 321, the second spur gear 322a engaged with the first spur gear 321a rotates. When the second spur gear 322a rotates, the worm gear 322b connected opposite the second spur gear 322a also rotates. In this case, the fixed gear 323 is fixed and coupled to the fixed shaft 200 and thus is always maintained in the fixed state.

Accordingly, the movable frame 300 moves due to relative motion of the driving motor 321 and the driven gear 322 with respect to the fixed gear 323.

In other words, the driving motor 321 and the driven gear 322 of the automatic power transmitter 320 other than the fixed gear 323 may be fixed and coupled to the center cover 330 of the movable frame 300 to linearly and rotationally move the movable frame 300.

Since the two spur gears 321a and 322a are positioned collinearly and are engaged with each other to transmit driving force, the above-described automatic power transmitter 320 according to the present invention may increase driving force transmission efficiency, may reduce gear operation noise, and may be mounted in a small space of the center cover 330.

On the contrary, in the automatic power transmitter applied to the related art and using a bevel gear driving method in which a gear provided in a vertical direction and a gear provided in a horizontal direction are engaged with each other, gear teeth are easily deformed due to a vertical load, operation noise is large, and the size of a center cover is increased due to a large installation area.

The driving motor 321 is mounted outside the center cover 330, and a fixing bracket 332 for fixing the driving motor 321 is mounted on the center cover 330.

In addition, a worm gear support plate 322c for stably fixing the worm gear 322b is provided in the center cover 330.

The coupled body 400 is made of injection-molded plastic, is coupled to surround the movable frame 300, and moves together with the movable frame 300. The coupled body 400 is produced in a structure capable of stably supporting the back of the head of the occupant.

The coupled body 400 includes a buffer member 410 capable of resiliently supporting the back of the head of the occupant for safety and comfort.

The coupled body 400 further includes a sensor 700 for detecting the position of the head of the occupant, and a controller (not shown) for receiving the detected signal from the sensor 700 and transmitting a driving signal to the automatic power transmitter 320.

The sensor 700 may include light-transmitting/receiving sensors 710 mounted at two sides of the headrest, or a light-transmitting photosensor 720 mounted on a front surface or at any side of the coupled body 400.

However, the sensor 700 is not limited to the light-transmitting/receiving sensors 710 or the light-transmitting photosensor 720, and may include any sensor capable of detecting the position of the head of the occupant, e.g., a proximity sensor.

The coupled body 400 further includes a manual adjuster 500 capable of manually adjusting the movable frame 300.

That is, the manual adjuster 500 arbitrarily cuts off an automatic power transmission system of the automatic power transmitter 320 and allows the occupant to directly, manually, and freely adjust the position of the coupled body 400.

The manual adjuster 500 corresponding to one of technical features of the present invention includes a manipulation switch 510 for providing electrical control to cut off current flowing through the automatic power transmitter 320.

That is, since the manual adjuster 500 uses an electrical control method to cut off current flowing through the automatic power transmitter 320, a mechanical pressing structure protruding from a body according to the related art, e.g., a pushrod, may not be required and thus a problem of unattractive appearance of the coupled body 400 may be solved. In addition, a safety accident of hitting and seriously damaging the neck and head of the occupant due to unexpected manual adjustment in a case when the pushrod is pressed by an external pressure may be prevented.

Furthermore, since the manual adjuster 500 according to the present invention does not require an element, e.g., a spring, for resiliently supporting the pushrod, a complicated assembly process may be prevented and manufacturing costs may be reduced, thereby greatly reducing the unit cost of production.

Herein, as illustrated in FIG. 1, the manipulation switch 510 includes buttons for individually providing forward driving force and backward driving force of the driving motor 321, and may have a structure capable of moving the coupled body 400 in a forward/backward direction when one of the buttons is selectively pressed. However, the manipulation switch 510 is not limited thereto and may include any switch capable of cutting off current.

The above-described manipulation switch 510 is electrically connected to the controller for transmitting a driving signal to the automatic power transmitter 3200.

Although the manual adjuster 500 according to an embodiment of the present invention is mounted at a side of the coupled body 400 in the drawings, the manual adjuster 500 is not limited thereto and may be mounted at any other location, e.g., a vehicle door (not shown) or a vehicle seat (not shown).

Operation of the vehicle headrest (passenger seat) according to an embodiment of the present invention will now be described with reference to FIGS. 6 to 10.

Initially, the coupled body 400 mounted on the top of a backrest of the seat is folded forward by about 90° (initial state).

That is, the coupled body 400 is folded forward in the initial state thereof in order to prevent a blind spot due to the coupled body 400 when an occupant (e.g., a passenger) is not seated.

Then, when the occupant opens a vehicle door, a door switch of the vehicle is immediately turned on. In this case, the controller having detected this signal drives the transportation screw 120 of the fixed lifting unit 100 to raise the coupled body 400 to an appropriate height and, at the same time, drives the driving motor 321 to unfold the coupled body 400 backward (preparation state).

When the occupant is seated in the vehicle seat, a seated occupant detection sensor (not shown) mounted on the vehicle seat detects whether the occupant is seated.

However, if the transportation screw 120 of the fixed lifting unit 100 is not provided, only the operation of unfolding the coupled body 400 backward may be performed.

Thereafter, when the door is closed and the seated occupant detection sensor mounted on the vehicle seat provides is turned on, it is determined that the occupant is seated, and the sensor 700 mounted on the coupled body 400 starts to detect the back of the head of the occupant. In this case, if the back of the head of the occupant is not detected by the sensor 700 for a preset time, e.g., 15 sec. to 25 sec., the coupled body 400 linearly moves in a forward direction due to backward driving force of the driving motor 321 under the control of the controller (step 1).

At this time, driving electricity input to the driving motor 321 is not continuously input but is input for a preset time (sec.).

After step 1 is completed, the sensor 700 detects the back of the head of the occupant again.

If the back of the head of the occupant is not detected by the sensor 700 for a preset time, the coupled body 400 linearly moves in a forward direction due to backward driving force of the driving motor 321 under the control of the controller (step 2).

Operation of step 2 is repeated sequentially in steps 3, 4, and 5 until the back of the head of the occupant is successfully detected.

In steps 3 to 5, the coupled body rotates by a certain angle.

That is, the coupled body 400 linearly moves in a forward/backward direction in steps 1 and 2, and rotationally moves in an upward/downward direction in steps 3 to 5.

As described above, the coupled body 400 not-continuously but discontinuously rotates in a forward direction of the vehicle seat. That is, electricity is input to the driving motor 321 at intervals of a predetermined time (sec.) in a stepped manner, the sensor 700 detects the back of the head of the occupant, and step 1 proceeds to step 2, step 3, step 4, and step 5 based on the result of detection.

Upon proceeding to a next step, if the back of the head of the occupant is successfully detected by the sensor 700 within a preset time, e.g., 15 sec. to 25 sec., the counted time (sec.) is initialized to '0' and thus motion of the coupled body 400 is stopped.

Only steps 1 to 5 are described above. After step 5, an additional switch (not shown) operates to initialize the counted time to '0' and stop the driving motor 321.

An operation time (sec.) of the driving motor 321 may be adjusted based on a rotation angle of the coupled body 400 in each step, and the number of steps may be freely set in advance.

Lastly, when the occupant exits the vehicle, the door switch and the seated occupant detection sensor mounted on the vehicle seat are turned off. In addition, the transportation screw 120 of the fixed lifting unit 100 is driven to lower the coupled body 400 and, at the same time, the driving motor 321 is driven to fold the coupled body 400 forward and return to the initial state.

When the occupant desires to directly and manually adjust the coupled body 400, if the occupant manipulates the manipulation switch 510 mounted on the coupled body 400 or at another location, the controller having detected the manipulation controls current to flow through the driving motor 321. In this case, the driving motor 321 through which the current flows may rotate the first spur gear 321a forward or backward based on a direction in which the user pushes or pulls the coupled body 400, and thus the position of the headrest may be manually adjusted.

The above descriptions according to the technical features of the present invention are provided with respect to a headrest mounted on a passenger seat of a vehicle, but may be equally or similarly applied to a headrest mounted on a driver seat or a back seat of a vehicle. In addition, an operation order may be partially modified and directions of components may be changed to tilt the headrest backward.

While the present invention has been particularly shown and described with reference to embodiments thereof, it will be understood by one of ordinary skill in the art that various changes in form and details may be made therein without departing from the spirit and scope of the invention as defined by the following claims. The embodiments should be considered in a descriptive sense only and not for purposes of limitation. Therefore, the scope of the invention is defined not by the detailed description of the invention but by the following claims, and all differences within the scope will be construed as being included in the present invention.

## Claims

1. A vehicle headrest comprising:
a fixed lifting unit mounted on a top of a backrest of a seat and capable of being raised or lowered;
a fixed shaft fixed to the fixed lifting unit and extending in a horizontal direction;
a movable frame mounted on the fixed shaft and comprising guide rails and an automatic power transmitter to linearly move in a forward/backward direction and rotationally move in an upward/downward direction;
a coupled body coupled to surround the movable frame and moving together with the movable frame; and
a manual adjuster mounted on the coupled body to manually adjust the movable frame,
wherein the manual adjuster comprises a manipulation switch for providing electrical control to cut off current flowing through the automatic power transmitter.

2. The vehicle headrest according to claim 1, wherein the manipulation switch comprises buttons for individually providing forward driving force and backward driving force of the driving motor, and
wherein the coupled body moves in a forward/backward direction when one of the buttons is selectively pressed.

3. The vehicle headrest according to claim 1, wherein the automatic power transmitter comprises:
a driving motor having mounted a first spur gear on a driving shaft thereof;
a driven gear having mounted at a side thereof a second spur gear engaged with the first spur gear to rotationally move, and having mounted a worm gear at another side thereof; and
a fixed gear coupled to the fixed shaft and engaged with the worm gear.

4. The vehicle headrest according to claim 3, wherein the driven gear and the fixed gear are mounted in a center cover of the movable frame,
wherein the driving motor is mounted outside the center cover, and
wherein a fixing bracket for fixing the driving motor is mounted on the center cover.

5. The vehicle headrest according to claim 3, wherein the movable frame further comprises:
a center cover for mounting the guide rails and the automatic power transmitter thereon;
side covers mounted at two ends of the fixed shaft by interposing the center cover therebetween; and
side guide rails coupled to the side covers to guide the side covers to move relative to the fixed shaft.

6. The vehicle headrest according to any one of claims 1 to 4, wherein the fixed lifting unit comprises:
a body;
a transportation screw for raising or lowering the body;
lifting supporters individually mounted at two sides of the body and extending by a certain length; and
fixing clamps for integrally fixing the lifting supporters to the fixed shaft.

7. The vehicle headrest according to claim 6, wherein each of the fixing clamps comprises:
a first clamp and a second clamp complementarily coupled to each other by interposing the fixed shaft therebetween; and
fastening bolts for fastening the first and second clamps.
